(19) **Europäisches Patentamt / European Patent Office / Office européen des brevets**

(11) **EP 3 015 151 B1**

(12) **FASCICULE DE BREVET EUROPEEN**

(45) Date de publication et mention de la délivrance du brevet:
**29.03.2017 Bulletin 2017/13**

(51) Int Cl.:
*B01D 3/32* *(2006.01)*    *B01D 53/18* *(2006.01)*
*B01F 3/04* *(2006.01)*    *B63B 35/44* *(2006.01)*
*B01D 3/00* *(2006.01)*

(21) Numéro de dépôt: **15306365.6**

(22) Date de dépôt: **07.09.2015**

(54) **PLATEAU DISTRIBUTEUR COMPACT POUR LES COLONNES DE CONTACT GAZ/LIQUIDE OFFSHORE**

KOMPAKTE VERTEILUNGSPLATTFORM FÜR OFFSHORE-GAS-/FLÜSSIGKEITSKONTAKTSÄULEN

COMPACT DISPENSER TRAY FOR OFFSHORE GAS/LIQUID CONTACT COLUMNS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2014 FR 1459001**

(43) Date de publication de la demande:
**04.05.2016 Bulletin 2016/18**

(73) Titulaire: **IFP Énergies nouvelles**
**92852 Rueil-Malmaison Cedex (FR)**

(72) Inventeurs:
• **HAROUN, Yacine**
**69520 Grigny (FR)**
• **ALIX, Pascal**
**38150 Roussillon (FR)**
• **FOURATI, Manel**
**69200 Venissieux (FR)**

(56) Documents cités:
EP-A1- 2 653 203    FR-A1- 2 980 719
FR-A1- 2 989 595    US-A1- 2004 197 245

**Description**

La présente invention concerne le domaine des colonnes de contact gaz/liquide offshores, et plus particulièrement les unités offshores de traitement de gaz, de captage du $CO_2$, de déshydratation ou encore de distillation.

Les unités offshores de traitement de gaz et/ou de captage du $CO_2$ par lavage aux amines comprennent des colonnes d'absorption et de régénération de fluides, liquide ou gazeux. Ces dernières fonctionnent en écoulement gaz/liquide à contre-courant où à co-courant et sont installées sur des bateaux, des barges flottantes ou des plateformes offshore, par exemple de type FPSO (de l'anglais Floating Production, Storage and Offloading qui signifie plateforme de production de stockage et de déchargement), ou du type FLNG (de l'anglais Floating Liquefied Natural Gas qui signifie plateforme de gaz naturel liquéfié). Sur les barges flottantes, peuvent être installées également des colonnes de distillation ou des colonnes de déshydratation.

Le document FR2989595 décrit un distributeur de liquide pour une colonne destinée à être embarquée sur une barge. Le plateau distributeur ne décrit pas de compartiment de rétention en périphérie dudit plateau,

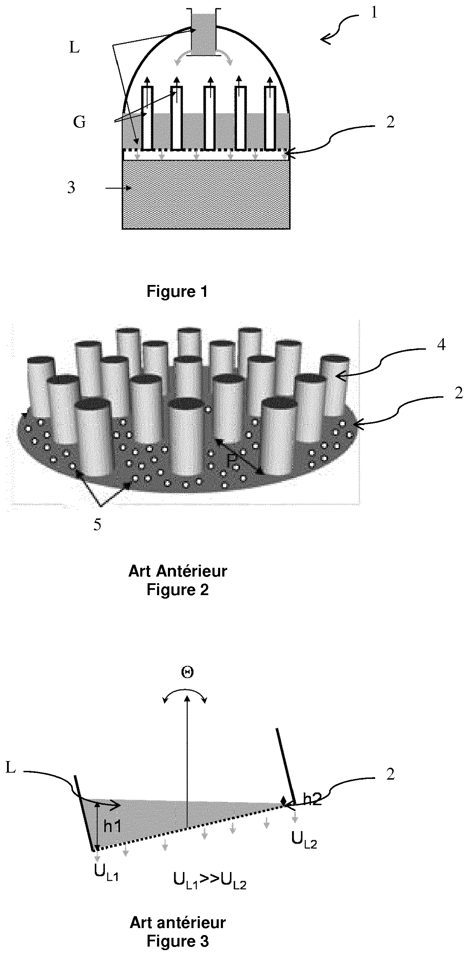

Les colonnes utilisées dans ces unités offshores de traitement de gaz et/ou de capture de $CO_2$ et/ou de distillation et/ou de déshydratation fonctionnent généralement sur le principe d'un échange de matière et/ou de chaleur entre le gaz et le fluide qui circulent dans les colonnes. La figure 1 représente un cas particulier d'une colonne de traitement de gaz 1 équipée d'un plateau distributeur en tête de colonne. Classiquement, cette colonne de traitement de gaz 1 comporte plusieurs sections remplies par un contacteur 3, un plateau distributeur 2 est disposé au-dessus de chaque section 3. Le contacteur gaz/liquide met en contact le gaz G et le liquide L afin de permettre les échanges.

Les distributeurs standards 2 utilisés dans les colonnes d'absorption/régénération ou encore de distillation sont généralement constitués d'un plateau collecteur/distributeur équipé de cheminées 4 (cf. figure 2). La distribution du liquide se fait par le passage du liquide dans des orifices 5 positionnés sur le bas du plateau 2 et la distribution du gaz se fait par les cheminées 4. Chaque cheminée 4 permet le passage du gaz, selon le mode de fonctionnement contre-courant ou co-courant, de la partie basse de la colonne vers la partie haute de la colonne 1 ou bien de la partie haute vers la partie basse. Les cheminées 4 sont en saillie d'un côté du plateau 2 et sont perpendiculaires à celui-ci. Chaque cheminée 4 est formée de plusieurs parois, par exemple parallélépipédiques ou cylindriques qui délimitent un volume interne qui est ouvert de part et d'autre du plateau 2. Pour éviter que le liquide ne passe dans les cheminées 4, l'ouverture d'échappement ou d'arrivée du gaz au-dessus du plateau (selon le mode de fonctionnement à contre-courant ou à co-courant), est préférentiellement orthogonale à la direction longitudinale de la cheminée 4. L'objectif du plateau distributeur est de distribuer le liquide L de manière homogène sur le contacteur gaz/liquide 3.

Les plateaux équipés de cheminées peuvent être de différents types, et les cheminées peuvent être positionnées suivant différentes configurations. Différentes variantes de plateaux distributeurs sont exposées notamment dans les demandes de brevet et brevets suivants : US6338774B, US2004020238A, US6149136A et US5752538A.

Les colonnes de contact gaz/liquide considérées sont placées sur des structures flottantes, par exemple, de type bateau, plateforme ou encore barge, sensibles à la houle. De ce fait, les équipements installés sur ces unités et notamment les plateaux distributeurs gaz/liquide subissent des mouvements de houle avec jusqu'à six degrés de liberté ("lacet, tangage, roulis, pilonnement, embardé, cavalement").

A titre indicatif, l'angle associé à la combinaison des oscillations de tangage et de roulis peut être de l'ordre de +/- 5° avec une période allant de 10 à 20 s. Les ordres de grandeur des accélérations longitudinale, transversale et verticale alors rencontrées dans la colonne sont respectivement de l'ordre de 0,33/1,28/0,33 m/s$^2$ à 50 m au-dessus du pont.

Dans ces conditions, le fonctionnement des plateaux distributeurs classiques équipés de cheminées (figure 2) peut être fortement perturbé. En effet, le fonctionnement de ces distributeurs est principalement gravitaire, une garde de liquide de hauteur homogène "h" doit s'établir sur le plateau distributeur. Le carré de la vitesse de passage du liquide par les orifices 5 situés en bas du plateau 2 est proportionnel à la hauteur de la garde liquide ($U_L{}^2 \propto$ gh). Lorsque le plateau 2 est incliné sous l'effet de la houle (figure 3), la hauteur de la garde liquide n'est plus uniforme sur le plateau distributeur ($h_1 > h_2$) ce qui provoque un déséquilibre dans la distribution du liquide en entrée du contacteur gaz/liquide 3. La qualité de distribution et donc l'efficacité de la colonne sont fortement impactées. Cette mal-distribution, si elle n'est pas maitrisée, peut sensiblement dégrader les performances de la colonne. Il faudrait une garde liquide importante pour compenser ces effets, ce qui signifie une augmentation de l'encombrement et du poids qui ne convient pas pour des unités offshore.

Afin d'éviter ce type de problèmes, des éléments de distribution peu sensibles aux défauts d'horizontalité ont été mis en oeuvre. Ces distributeurs sont généralement constitués d'un collecteur et d'un distributeur reliés par une ou plusieurs conduites verticales relativement longues pour que le distributeur reste en charge quelles que soient les conditions de houle rencontrées. Ces distributeurs sont généralement peu sensibles aux effets de houle et génèrent une bonne qualité de distribution mais sont très encombrants : leur hauteur peut être de plusieurs mètres dans certains cas (US2004020238 A).

Une autre solution à ces problèmes est décrite dans les brevets FR 2771018 A et FR 2771019 A, elle consiste à utiliser deux distributeurs (primaire et secondaire). Chaque distributeur est divisé en plusieurs compartiments dans lesquels se répartit le liquide. Grâce à ces compartiments, le liquide est mieux réparti lors de l'inclinaison de la colonne. Toutefois, cette solution reste encombrante car elle nécessite deux distributeurs. En outre, les compartiments ne communiquant pas ensemble, la répartition du liquide dans les compartiments n'est pas équilibrée.

Le brevet US 5,132,055, quant à lui, divulgue un plateau distributeur dans lequel les cheminées permettent de compartimenter la zone d'écoulement du liquide. Selon ce document, les cheminées sont alors toutes parallèles. Les compartiments possèdent donc tous une surface différente. En outre, le parallélisme des cheminées ne permet pas d'assurer une bonne distribution et une bonne répartition du liquide sur l'ensemble du plateau. En effet, lorsque l'inclinaison du plateau est parallèle à ces cheminées, la hauteur de la garde de liquide varie de manière importante entre les deux extrémités du plateau.

La demande de brevet FR 2989595 A (US 2013/277868 A) décrit un plateau distributeur sur lequel sont formées des cloisons perforées délimitant des compartiments. Les cloisons perforées permettent de limiter la mauvaise distribution du liquide.

L'invention concerne un plateau distributeur comportant au moins une cloison perforée délimitant des compartiments. Selon l'invention, le plateau distributeur comprend au moins un compartiment de distribution, au sein duquel le gaz et le liquide peuvent traverser le plateau, et au moins un compartiment de rétention, au sein duquel le liquide ne peut pas traverser le plateau. Le compartiment de rétention est situé en périphérie du plateau. La présence d'au moins un compartiment de rétention en périphérie du plateau permet une bonne qualité de distribution et une bonne dispersion du liquide, même pour des inclinaisons importantes du plateau imposées par le milieu marin.

**Le dispositif selon l'invention**

L'invention concerne un plateau distributeur pour colonne d'échange de chaleur et/ou de matière entre un gaz et un liquide comportant au moins une cloison délimitant des compartiments sur la face supérieure dudit plateau, ladite cloison comportant des perforations pour permettre l'écoulement d'une partie du liquide entre lesdits compartiments, dans lequel ledit plateau comporte au moins un compartiment de distribution comprenant au moins un moyen pour le passage du liquide à travers ledit plateau et au moins un moyen pour le passage du gaz à travers ledit plateau. Ledit plateau comporte au moins un compartiment de rétention en périphérie dudit plateau ne comportant aucun moyen pour le passage du liquide à travers ledit plateau.

Selon l'invention, ledit compartiment de rétention ne comporte aucun moyen pour le passage du gaz à travers ledit plateau.

Avantageusement, chaque compartiment en périphérie dudit plateau est un compartiment de rétention.

De préférence, lesdits moyens pour le passage du gaz sont des éléments de distribution de gaz sous forme de cheminée en saillie de la face supérieure dudit plateau.

Selon une variante de réalisation, ladite cloison a une hauteur supérieure ou sensiblement égale à la hauteur desdites cheminées.

Selon une caractéristique de l'invention, les perforations sont disposées à la base de ladite cloison.

Selon un aspect de l'invention, ledit plateau comporte plusieurs cloisons sécantes.

Avantageusement, lesdites cloisons sont composées de deux séries de cloisons, les cloisons de chaque série étant parallèles entre elles et sécantes aux cloisons de l'autre série.

De plus, les perforations de deux cloisons parallèles délimitant un même compartiment peuvent ne pas être alignées.

De manière avantageuse, les dimensions $L_{c1}$ et $L_{c2}$ dudit compartiment de distribution sont comprises entre 100 et 1000 mm.

De manière préférentielle, les dimensions $L_{c3}$ dudit compartiment de rétention sont comprises entre 40 et 200 mm.

Selon un mode de réalisation de l'invention, les moyens pour le passage du liquide sont des orifices et/ou des cheminées en saillie de la face supérieure dudit plateau.

Selon une variante de réalisation de l'invention, ledit plateau comporte un système de distribution secondaire en saillie de la face inférieure dudit plateau pour répartir ledit liquide en provenance desdits moyens pour le passage du liquide.

Ledit système de distribution secondaire peut comprendre des cheminées et/ou des déflecteurs.

En outre, l'invention concerne une colonne d'échange de chaleur et/ou de matière entre un gaz et un liquide, dans laquelle les deux fluides sont mis en contact au moyen d'un garnissage. Ladite colonne comporte au moins un plateau distributeur selon l'invention pour distribuer lesdits fluides sur ledit garnissage.

L'invention concerne également une barge flottante, notamment pour la récupération d'hydrocarbures, qui comprend au moins une colonne selon l'invention.

De plus, l'invention concerne l'utilisation d'une colonne selon l'invention pour un procédé de traitement de gaz,

de captage de $CO_2$, de distillation ou de transformation d'air.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1, déjà décrite, illustre le cas particulier d'une colonne de traitement de gaz ou de capture de $CO_2$ équipée d'un plateau distributeur en tête de colonne.

La figure 2, déjà décrite, illustre un plateau distributeur selon l'art antérieur.

La figure 3, déjà décrite, illustre un plateau distributeur incliné selon l'art antérieur.

La figure 4 illustre une vue partielle d'un plateau distributeur selon l'invention.

La figure 5 illustre un plateau distributeur incliné selon l'invention.

La figure 6 illustre une vue de dessus d'un compartiment de distribution selon un exemple de réalisation de l'invention.

La figure 7 illustre une variante de réalisation du plateau distributeur selon l'invention.

La figure 8 illustre une vue partielle d'un plateau distributeur selon un mode de réalisation de l'invention.

La figure 9 est une courbe comparative entre un plateau distributeur selon l'invention et un plateau distributeur selon l'art antérieur.

**Description détaillée de l'invention**

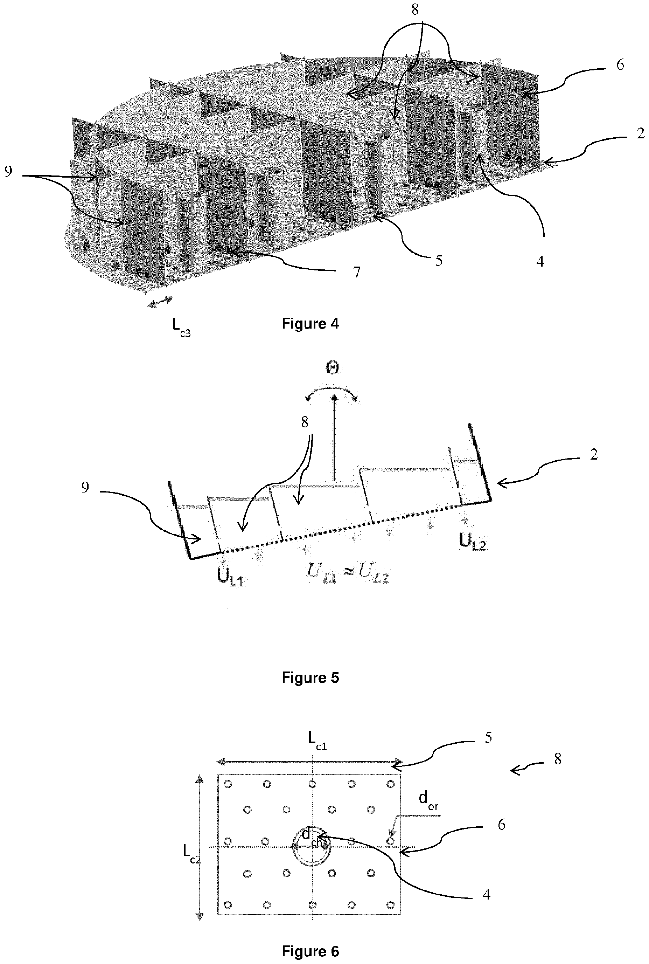

La figure 4 illustre un plateau distributeur selon l'invention, il s'agit d'une vue isométrique d'un plateau coupé selon un diamètre du plateau. L'autre partie du plateau se déduit par symétrie, avec une cloison au niveau du plan de coupe.

L'invention concerne un plateau distributeur pour colonne d'échange de chaleur et/ou de matière entre un gaz et un liquide, comprenant classiquement au moins un moyen pour le passage de gaz (tel qu'une cheminée) 4 à travers le plateau 2, et au moins un moyen pour le passage du liquide (tel qu'un orifice) 5 à travers le plateau 2.

En outre, le plateau distributeur comprend au moins une cloison 6 permettant de compartimenter une face du plateau, la cloison 6 est perforée 7 pour permettre l'écoulement d'une partie du liquide entre les compartiments 8, 9 formés par la cloison 6. Selon un exemple de réalisation de l'invention, le plateau distributeur comprend plusieurs cloisons 6. Le plateau distributeur 2 selon l'invention comporte au moins un compartiment de distribution 8 et au moins un compartiment de rétention 9.

Chaque compartiment de distribution 8 permet la distribution des fluides et comporte au moins un moyen pour le passage du gaz 4 et au moins un, de préférence plusieurs, moyen pour le passage du liquide 5. De préférence, chaque compartiment de distribution 8 comporte une unique cheminée 4 pour le passage du gaz et plusieurs orifices 5 pour le passage du liquide. La figure 6 représente un exemple de compartiment de distribution 8 en vue du dessus. Le compartiment de distribution illustré comprend une cheminée de gaz 4 centrale entourée d'une pluralités d'orifices 5 pour le passage du liquide.

Chaque compartiment de rétention 9 permet de retenir le liquide sur la face (ou surface) supérieure du plateau et ne comporte aucun moyen pour le passage du liquide à travers le plateau. De préférence, le compartiment de rétention 9 ne comporte également aucun moyen pour le passage du gaz à travers le plateau. Les cloisons 6 des compartiments de rétention 9 sont également perforées. Selon l'invention, les compartiments de rétention 9 sont situés en périphérie du plateau 2, c'est-à-dire que les compartiments de rétention 9 sont formés par les cloisons 6 et la virole de la colonne 1. Selon un mode de réalisation, une cloison supplémentaire pourrait être mise en place sur la périphérie de la virole pour faciliter l'installation du distributeur et assurer une bonne étanchéité entre les compartiments de rétention. Selon un aspect de l'invention, tous les compartiments à la périphérie du plateau 2 sont des compartiments de rétention 9 et les autres compartiments, c'est-à-dire les compartiments centraux (sans délimitation par la virole de la colonne 1) sont des compartiments de distribution 8.

Les cloisons 6 génèrent des compartiments 8, 9 de liquide, qui servent de "barrière" lorsque le plateau est incliné. Ainsi, on maintient une garde de liquide relativement homogène même avec une inclinaison importante. Une bonne qualité de distribution du liquide sur le contacteur gaz/liquide est de ce fait garantie. On appelle garde de liquide, l'interface entre le gaz et le liquide. La hauteur de la garde de liquide correspond au niveau du liquide par rapport à la face supérieure du plateau. En outre, on appelle zone d'écoulement du liquide la zone sur laquelle circule le liquide ; il s'agit du côté supérieur du plateau, sur lequel les cloisons 6 sont en saillie. De plus, grâce aux perforations 7 des cloisons 6, le liquide peut s'écouler sur la totalité de la face du plateau distributeur 2, assurant ainsi une bonne dispersion radiale du liquide. Les compartiments de rétention 9 permettent d'atténuer l'accumulation et la diminution du liquide lors des oscillations et d'assurer ainsi une bonne qualité de distribution du liquide.

La figure 5 illustre un plateau distributeur selon l'invention dans une position inclinée. Le plateau distributeur 2 comporte de chaque côté (à la périphérie) un compartiment de rétention 9, les compartiments centraux étant des compartiments de distribution 8. Par comparaison avec la figue 3, la hauteur de la garde de liquide varie moins, donc les vitesses de sortie du liquide $U_{L1}$ et $U_{L2}$ diffèrent peu. Par conséquent, la distribution est plus homogène qu'avec le plateau distributeur selon l'art antérieur.

Selon un mode de réalisation de l'invention, les moyens pour le passage du gaz sont des cheminées 4. Selon une caractéristique de l'invention, les cheminées peuvent être cylindriques, cubiques, parallélépipédiques, ou de toute forme analogue. De plus, le pas des cheminées sur le plateau peut être un pas triangulaire ou carré.

Selon un aspect de l'invention, les moyens pour le passage du liquide sont des orifices 5 qui équipent le plateau 2. Les orifices 5 peuvent avoir un pas triangulaire ou carré. Avantageusement, le plateau 2 comporte un nombre d'orifices 5 supérieur au nombre de cheminées 4. De plus, les orifices 5 peuvent être de même taille ou de tailles différentes.

Selon le mode de réalisation de l'invention illustré à la figure 4, les cloisons sont réparties en deux séries (ou ensembles) de cloisons. Dans chaque série, les cloisons sont parallèles entre elles, écartées régulièrement d'une longueur $L_c$, et sécantes aux cloisons de l'autre série, qui sont écartées régulièrement d'une longueur $L_{c2}$. Ainsi, les compartiments de distribution 8 ont sensiblement une forme de parallélogramme, et selon l'exemple illustré de rectangle. Avantageusement, selon ce mode de réalisation, les cloisons 6 ont une hauteur supérieure, inférieure ou sensiblement égale à la hauteur des cheminées 4. Cette hauteur est suffisante pour assurer une bonne qualité de distribution et en outre l'encombrement du plateau distributeur selon l'invention reste identique à l'encombrement d'un plateau distributeur "classique". Chaque compartiment de distribution 8 comporte une seule cheminée 4. Selon ce mode de réalisation, on peut choisir un écartement $L_{c1}$ et $L_{c2}$ sensiblement égal à la distance séparant deux cheminées voisines.

Avantageusement, les compartiments de rétention 9 ont une surface inférieure à la surface des compartiments de distribution 8, afin de garantir une surface importante de distribution. La longueur $L_{c3}$, qui correspond à la longueur des cloisons sécantes au bord du plateau, peut être notamment inférieure à la longueur $L_{c1}$ (cf. figure 6).

Il est également possible de déterminer la longueur $L_{c1}$ et/ou la longueur $L_{c2}$, en fonction de caractéristiques du plateau souhaitées : un indice de déséquilibre IQ (exprimé en pourcentage), et un angle d'inclinaison maximale $\theta$ imposé par les conditions marines. Pour quantifier la sensibilité au milieu marin du plateau, on définit l'indice de déséquilibre IQ liquide comme :

$$IQ(\%) = \frac{q_{L,max} - q_{L,min}}{q_{L,moyen}} \times 100 \qquad \text{(équation 1)}$$

Avec : $q_{L,max}$ : le débit de liquide maximum sortant d'un des compartiments du distributeur. $q_{L,min}$ et le débit de liquide minimum sortant d'un des compartiments du distributeur. $q_{L,moyen}$ est le débit moyen sortant du distributeur. Ces débits sont des fonctions de $U_{L1,2}$ : la vitesse du liquide sortant des orifices situés aux extrémités du plateau distributeur comme présenté sur les figures 3 (art antérieur) et 5 (selon l'invention). Une faible valeur d'indice de déséquilibre liquide indique une faible sensibilité de la distribution aux effets de la houle. A l'inverse, une valeur élevée de cet indice IQ indique un fort déséquilibre de distribution.

Les distances caractéristiques $L_{c1}$, $L_{c2}$ du plateau doivent être optimisées de manière à minimiser l'indice de déséquilibre. En fonction des caractéristiques du plateau et des conditions de fonctionnement (angle maximum d'inclinaison $\theta$ imposé par le milieu marin), il est possible de définir une longueur optimale de $L_{c1}$ et $L_{c2}$ avec la combinaison des formulations suivantes :

$$\begin{cases} h_{max} = ho + L_{C1,2} \tan\theta \\ h_{min} = ho - L_{C1,2} \tan\theta \\ \Delta h = h_{max} - h_{min} = 2L_{C1,2} \tan\theta \\ U_{L1} \propto c_f \sqrt{2gh_{max}} \\ U_{L2} \propto c_f \sqrt{2gh_{min}} \end{cases}$$

avec :

$c_f$ : le coefficient de frottement à l'orifice,

$h_0$ : hauteur à l'équilibre ($\theta=0°$) de la garde de liquide dans un compartiment du distributeur,

$h_{max}$ :     la hauteur maximale de garde liquide dans un compartiment du distributeur,

$h_{min}$ :     la hauteur minimale de la garde liquide dans un compartiment du distributeur,

$U_{L1}$, $U_{L2}$ :     vitesse du liquide à l'orifice, et

le signe $\propto$     signifie proportionnel à.

Il est donc possible de déterminer les longueurs $L_{c1}$, $L_{c2}$ en fonction de la géométrie du plateau et des conditions marines pour respecter un indice de déséquilibre donné. Par exemple pour avoir un indice de déséquilibre IQ < 10%, il faut que $\Delta h \leq 50mm$ de ce fait les longueurs $L_{c1}$, $L_{c2}$ doivent vérifier la relation suivante : $L_{C1,2} \leq \dfrac{50}{2\tan\theta}(mm)$ .

Selon un mode de réalisation de l'invention, chaque cloison 6 contient une unique perforation 7. Alternativement et tel qu'illustré sur la figure 4, chaque cloison 6 comporte deux perforations 7. Ces perforations permettent l'écoulement du fluide entre les compartiments 8, 9, ce qui assure une bonne répartition radiale du liquide sur la totalité du plateau distributeur. Les perforations 7 peuvent être circulaires, oblongues, rectangulaires... Toutefois, la surface des perforations 7 peut, de préférence, rester faible par rapport à la surface des cloisons pour que les cloisons 6 continuent de jouer leur rôle principal : limiter la quantité de fluide s'écoulant sur le plateau, afin de garantir une bonne homogénéité de la hauteur du liquide sur le plateau. De plus, selon ce mode de réalisation, pour empêcher un écoulement linéaire du fluide et pour assurer une bonne dispersion radiale du liquide, les perforations 7 de deux parois parallèles d'un compartiment de distribution 8 ne sont pas alignées (ou coaxiales), c'est-à-dire qu'une droite qui passe par les centres de perforations de deux cloisons parallèles, n'est pas parallèle à une des cloisons du compartiment 8. Avantageusement, les perforations 7 sont placées dans la partie inférieure des cloisons 6, c'est à dire à proximité du plateau distributeur, pour faciliter l'écoulement du liquide ; les perforations 7 restent toujours situées sous la hauteur de la garde de liquide.

Le nombre de compartiments (et par conséquent le nombre de cloisons) peut être dépendant du diamètre du plateau. De préférence, un plateau de grande dimension est plus compartimenté qu'un plateau de plus petite dimension.

En variante du mode de réalisation préférentiel de l'invention, on peut modifier les caractéristiques suivantes :

- les cloisons peuvent former des compartiments comportant respectivement plusieurs cheminées pour le passage du gaz,
- les compartiments ont une forme triangulaire, pour ce mode de réalisation, on peut disposer trois séries de cloisons, les cloisons d'une même série étant parallèles entre elles, et sécantes aux cloisons des autres séries,
- les compartiments ont une forme hexagonale (par exemple du type alvéole de ruche),
- les perforations de deux côtés en face à face d'un compartiment sont alignées,
- chaque cloison comporte plusieurs perforations.

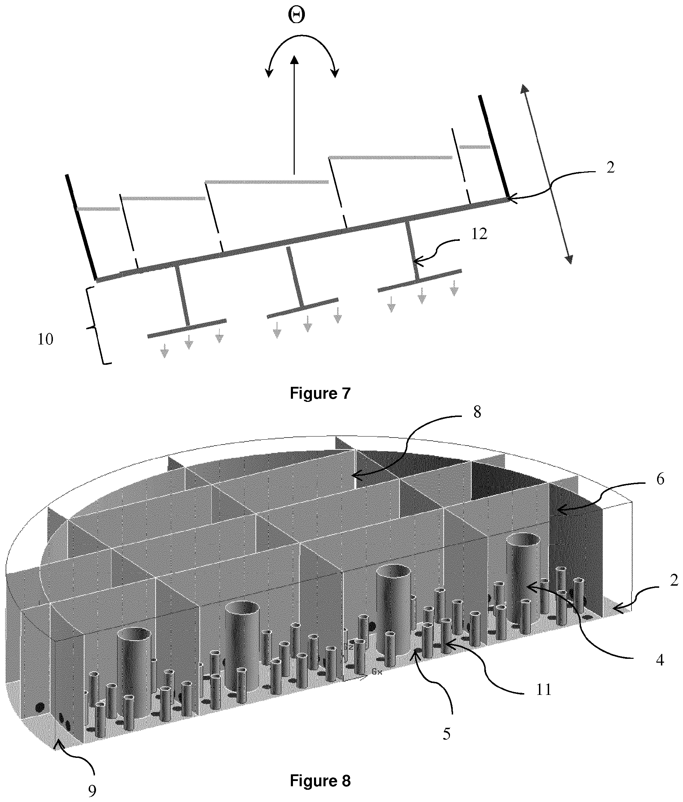

De plus, selon une variante de réalisation illustrée à la figure 7, le plateau distributeur 2 peut comprendre un système de distribution secondaire 10 du liquide. Le système de distribution secondaire 10 est en saillie de la face inférieure du plateau et sert à distribuer sur le garnissage le liquide en provenance des moyens de passage du liquide. Le système de distribution secondaire 10 améliore la qualité de distribution de liquide en orientant la distribution du liquide sur le garnissage. Par exemple, le système de distribution secondaire 10 peut diriger le liquide vers la périphérie du garnissage sous les compartiments de rétention 9. Dans ce cas, la hauteur de la garde de liquide $H_{liq}$ correspond à la hauteur de liquide au-dessus du plateau 2 additionné de la hauteur du système de distribution secondaire 10. Tel qu'illustré, le système de distribution secondaire 10 peut comprendre des déflecteurs 12 qui orientent la distribution du liquide. Alternativement, le système de distribution secondaire peut comprendre un ensemble d'arroseurs (ensemble de plusieurs conduites disposées en parallèle et équipées d'orifices), des cheminées en saillie sur la partie inférieure du plateau distributeur, et/ou un ensemble de conduites perforées disposées en parallèle sous le plateau distributeur.

De plus, selon une variante de réalisation illustrée à la figure 8, , les moyens de passage du liquide comportent en plus des orifices 5, des cheminées de liquide 11 équipées d'au moins une perforation (ou au moins une rangée de perforations), les cheminées de liquide 11 étant en saillie de la face supérieure dudit plateau 2. Cette solution permet une bonne flexibilité du plateau distributeur en étant adapté à différents débits. En effet, lorsque le débit de liquide est faible, la hauteur de garde du liquide dans le compartiment distributeur 8 sur le plateau 2 (hauteur du liquide par rapport au niveau du plateau) est faible, seul les orifices 5 permettent au liquide de traverser le plateau. Lorsque le débit de liquide est plus élevé, selon le mode de réalisation, la hauteur de garde du liquide augmente et les orifices radiaux des cheminées de liquide 11 permettent au liquide de traverser le plateau. La hauteur des cheminées pour le passage de liquide 11 est avantageusement inférieure à la hauteur des cheminées pour le passage de gaz 4.

Alternativement à la variante de réalisation de la figure 8, les moyens de passage du liquide peuvent comporter uniquement des cheminées de liquide 11, qui peuvent être de hauteurs différentes et/ou qui peuvent comporter des perforations à des hauteurs différentes, de manière à rendre le plateau distributeur flexible.

Selon un mode de réalisation, les dimensions du plateau et de ses composants vérifient les intervalles suivants :

- le pas P des cheminées 4 est compris entre 50 et 500 mm, préférentiellement entre 100 et 300 mm,
- le plateau de distribution 2 a une hauteur comprise entre 100 et 2000 mm, de préférence entre 600 et 1000 mm,
- le diamètre du plateau 2 est compris entre 300 et 10000 mm,
- si la forme des éléments 4 est cylindrique, le diamètre $d_c$ est compris entre 50 et 500 mm,
- la hauteur des cheminées 4 est comprise entre 300 et 2000 mm, de préférence entre 400 et 700 mm,
- la distance au bord minimum des cheminées 4 est comprise entre 50 et 400 mm, et de préférence entre 100 et 200 mm,
- la hauteur des cloisons 6 est comprise entre 100 et 2000 mm, de préférence entre 700 et 1000 mm,
- le diamètre $d_{or}$ des perforations 7 est compris entre 5 et 100 mm, de préférence entre 30 et 50 mm,
- les distances $L_{c1}$ et $L_{c2}$ des compartiments de distribution 8 sont comprises entre 100 et 1000 mm, et vérifient préférentiellement la relation suivante : $L_{ci} \leq \dfrac{50}{2\tan\theta}\,(mm)$ avec i = 1 ou 2, avec $\theta$ angle maximum d'inclinaison, et
- la distance $L_{c3}$ des compartiments de rétention 9 est comprise entre 40 et 200 mm.

Ces différentes variantes de réalisation du plateau distributeur selon l'invention peuvent être combinées entre elles, notamment les variantes de réalisation des figures 7 et 8 ; par exemple des cheminées 11 peuvent être reliées à des déflecteurs 12.

L'invention concerne également une colonne 1 d'échange de matière et/ou de chaleur entre deux fluides, dans laquelle deux fluides sont mis en contact au moyen d'un contacteur gaz/liquide 3, la colonne 1 comprenant au moins une première entrée d'un fluide liquide, au moins une deuxième entrée d'un fluide gazeux, au moins une première sortie d'un fluide gazeux et au moins une deuxième sortie d'un fluide liquide. La colonne 1 comporte en outre un plateau distributeur 2 tel que décrit ci-dessus, pour permettre la distribution des fluides sur le contacteur 3.

La colonne 1 est avantageusement une colonne de lavage aux amines mais elle est adaptée à tout type de solvants.

De manière avantageuse, le contacteur gaz/liquide 3 est un lit de garnissage structuré ou vrac.

En outre, l'invention concerne une barge flottante offshore, notamment du type FPSO ou FLNG, notamment pour la production et le traitement d'hydrocarbures. La barge comprend une colonne d'échange de matière et/ou de chaleur entre un gaz et un liquide tel que décrit ci-dessus. La colonne peut faire partie d'une unité de traitement de gaz et/ou de captage de $CO_2$ pour nettoyer des gaz produits (ou fumées).

La colonne selon l'invention peut être utilisée dans des procédés de traitement de gaz, de captage de $CO_2$, de distillation ou de transformation de l'air.

Exemple comparatif

Pour illustrer les avantages de la présente invention, on se propose de comparer les résultats obtenus par l'invention (mode de réalisation de la figure 4) à ceux obtenus par un plateau distributeur selon l'art antérieur tel que décrit dans la demande de brevet FR 2989595 A (US 2013/277868 A). Dans ce cadre, on utilise une approche numérique de type CFD (de l'anglais Computational Fluid Dynamics pouvant être traduit par mécanique des fluides numérique) qui consiste à étudier les mouvements d'un fluide par la résolution numérique des équations de conservation de la masse et bilan de quantité de mouvement (équations de Navier-Stokes).

L'approche numérique utilisée est de type suivi d'interface (VOF pour Volume of Fluid : volume de fluide) décrite dans Hirt & Nichols, JCP 39, 201-225 (1981). Cette méthode, bien connue par l'homme du métier, est bien adaptée pour simuler le changement de topologie d'interface rencontré dans le distributeur soumis au mouvement de la houle (détachement, recollement d'interface, formation de déferlante ...). L'évolution de l'écoulement diphasique est décrite par les équations de conservation de la masse, de conservation de quantité de mouvement, et par l'équation de transport du taux de présence.

Les calculs ont été réalisés avec le logiciel commercial Fluent 14.5 ® (ANSYS, Etats-Unis).

Pour l'ensemble des calculs CFD d'évaluation présentés ci-après, l'angle associé au mouvement de roulis simulé est de +/- 5° avec une période de 15 s. Les propriétés des fluides sont : $\rho_L$ = 1000 kg/m3, $\mu_L$ = 1 cp, $\rho_G$ = 1,2 kg/m3, $\mu_G$ = 0,018 cp. La hauteur de garde de liquide sur le distributeur considérée est de 400 mm. Une distance au point de giration de la plateforme offshore de 50 m est prise en compte dans les calculs. Cette distance correspond aux distributeurs situés en tête de colonne, exposés aux plus fortes accélérations. Enfin, les effets capillaires sont supposés négligeables.

On rappelle que l'efficacité de distribution du système proposé est comparée à celle d'un plateau distributeur selon l'art antérieur dans le cas où le plateau est soumis aux mouvements de la houle. La sensibilité au milieu marin du plateau est quantifiée par l'indice de déséquilibre défini par l'équation (1).

Exemple 1 : Propriétés du plateau selon l'art antérieur

- Diamètre du plateau distributeur : 4000 mm
- Diamètre des cheminées de gaz : 100 mm
- Hauteur des cheminées de gaz : 600 mm
- Nombre de cheminées : 120
- Longueur des compartiments $L_{c1}$ x $L_{c2}$ : 300 x 300 mm
- Ouverture de la cloison : environ 1 %
- Densité de point d'arrosage : 84 pt/m$^2$ (nombre de points d'arrosage divisé par la surface totale du distributeur)
- Taux d'arrosage : 100 m$^3$/m$^2$/h

Exemple 2 : Propriétés du plateau selon l'invention (figure 4) :

- Diamètre du plateau distributeur : 4000 mm
- Diamètre des cheminées de gaz : 100 mm
- Hauteur des cheminées de gaz : 600 mm
- Nombre de cheminées : 120
- Longueur des compartiments de distribution $L_{c1}$ x $L_{c2}$ : 300 x 300 mm
- Longueur des compartiments de rétention $L_{c3}$ : 100 mm
- Ouverture de la cloison : environ 1 %
- Densité de point d'arrosage : 84 pt/m$^2$
- Taux d'arrosage : 100 m$^3$/m$^2$/h

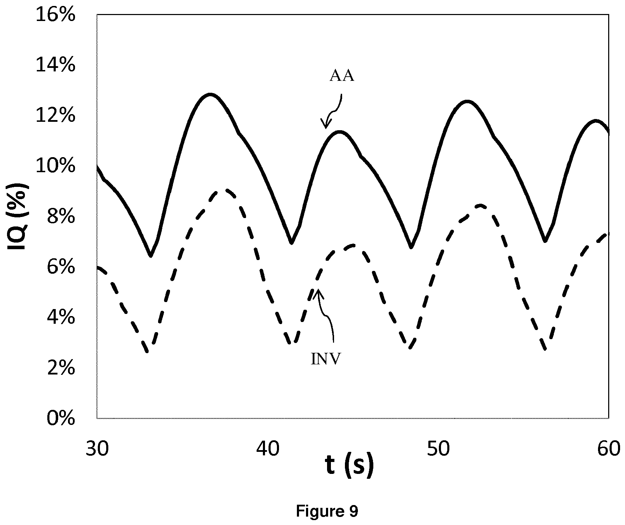

La figure 9 compare l'évolution temporelle de l'indice de déséquilibre IQ obtenu avec les deux plateaux distributeurs. Pour le plateau distributeur selon l'art antérieur FR 2989595 A (US 2013/277868 A), courbe AA, l'indice de déséquilibre moyen sur une période d'oscillation du plateau est de 10 %. Avec le plateau distributeur selon l'invention, courbe INV, la performance est meilleure, en effet, l'indice de déséquilibre moyen est 5,8 %. Cet exemple montre que le dispositif selon l'invention permet d'améliorer l'efficacité de distribution du plateau distributeur en milieu flottant.

**Revendications**

1. Plateau distributeur pour colonne d'échange (1) de chaleur et/ou de matière entre un gaz et un liquide comportant au moins une cloison (6) délimitant des compartiments (8, 9) sur la face supérieure dudit plateau (2), ladite cloison (6) comportant des perforations pour permettre l'écoulement d'une partie du liquide entre lesdits compartiments (8, 9), dans lequel ledit plateau comporte au moins un compartiment de distribution (8) comprenant au moins un moyen pour le passage du liquide (5, 11) à travers ledit plateau (2) et au moins un moyen pour le passage du gaz (4) à travers ledit plateau (2), **caractérisé en ce que** ledit plateau comporte au moins un compartiment de rétention (9) en périphérie dudit plateau (2) ne comportant aucun moyen pour le passage du liquide à travers ledit plateau.

2. Plateau selon la revendication 1, dans lequel ledit compartiment de rétention (9) ne comporte aucun moyen pour le passage du gaz à travers ledit plateau.

3. Plateau selon l'une des revendications précédentes, dans lequel chaque compartiment en périphérie dudit plateau est un compartiment de rétention (9).

4. Plateau selon l'une des revendications précédentes, dans lequel lesdits moyens pour le passage du gaz sont des éléments de distribution de gaz sous forme de cheminée (4) en saillie de la face supérieure dudit plateau.

5. Plateau selon la revendication 4, dans lequel ladite cloison (6) a une hauteur supérieure ou sensiblement égale à la hauteur desdites cheminées (4).

**6.** Plateau selon l'une des revendications précédentes, dans lequel les perforations (7) sont disposées à la base de ladite cloison (6).

**7.** Plateau selon l'une des revendications précédentes, dans lequel ledit plateau comporte plusieurs cloisons (6) sécantes.

**8.** Plateau selon la revendication 7, dans lequel lesdites cloisons (6) sont composées de deux séries de cloisons, les cloisons (6) de chaque série étant parallèles entre elles et sécantes aux cloisons (6) de l'autre série.

**9.** Plateau selon la revendication 8, dans lequel les perforations de deux cloisons (6) parallèles délimitant un même compartiment (8, 9) ne sont pas alignées.

**10.** Plateau selon l'une des revendications précédentes, dans lequel les dimensions $L_{c1}$ et $L_{c2}$ dudit compartiment de distribution (8) sont comprises entre 100 et 1000 mm.

**11.** Plateau selon l'une des revendications précédentes, dans lequel les dimensions $L_{c3}$ dudit compartiment de rétention (9) sont comprises entre 40 et 200 mm.

**12.** Plateau selon l'une des revendications précédentes, dans lequel les moyens pour le passage du liquide sont des orifices (5) et/ou des cheminées (11) en saillie de la face supérieure dudit plateau.

**13.** Plateau selon l'une des revendications précédentes, dans lequel ledit plateau comporte un système de distribution secondaire (10) en saillie de la face inférieure dudit plateau pour répartir ledit liquide en provenance desdits moyens pour le passage du liquide (5, 11).

**14.** Plateau selon la revendication 13, dans lequel ledit système de distribution secondaire (10) comprend des cheminées et/ou des déflecteurs (12).

**15.** Colonne d'échange de chaleur et/ou de matière entre un gaz et un liquide, dans laquelle les deux fluides sont mis en contact au moyen d'un garnissage (3), **caractérisé en ce que** ladite colonne (1) comporte au moins un plateau distributeur (2) selon l'une des revendications précédentes pour distribuer lesdits fluides sur ledit garnissage.

**16.** Barge flottante, notamment pour la récupération d'hydrocarbures, **caractérisée en ce qu'**elle comprend au moins une colonne (1) selon la revendication 15.

**17.** Utilisation d'une colonne selon la revendication 15 pour un procédé de traitement de gaz, de captage de $CO_2$, de distillation ou de transformation d'air.

**Patentansprüche**

**1.** Verteilerplatte für eine Kolonne für den Wärmeaustausch (1) und/oder Stoffaustausch zwischen einem Gas und einer Flüssigkeit, die mindestens eine Trennwand (6) aufweist, die Abteile (8, 9) auf der Oberseite der Platte (2) abgrenzt, wobei die Trennwand (6) Perforationen aufweist, um das Abfließen eines Teils der Flüssigkeit zwischen den Abteilen (8, 9) zu ermöglichen, wobei die Platte mindestens ein Abteil zum Verteilen (8) aufweist, umfassend mindestens ein Mittel für den Durchgang der Flüssigkeit (5, 11) durch die Platte (2) und mindestens ein Mittel für den Durchgang des Gases (4) durch die Platte (2), **dadurch gekennzeichnet, dass** die Platte mindestens ein Rückhalteabteil (9) am Rand der Platte (2) aufweist, das kein Mittel für den Durchgang der Flüssigkeit durch die Platte aufweist.

**2.** Platte nach Anspruch 1, wobei das Rückhalteabteil (9) kein Mittel für den Durchgang des Gases durch die Platte aufweist.

**3.** Platte nach einem der vorangehenden Ansprüche, wobei jedes Abteil am Rand der Platte ein Rückhalteabteil (9) ist.

**4.** Platte nach einem der vorangehenden Ansprüche, wobei die Mittel für den Durchgang des Gases Gasverteilungselemente in Form eines Schornsteins (4) sind, der aus der Oberseite der Platte vorsteht.

**5.** Platte nach Anspruch 4, wobei die Trennwand (6) eine Höhe aufweist, die größer als oder im Wesentlichen gleich der Höhe der Schornsteine (4) ist.

**6.** Platte nach einem der vorangehenden Ansprüche, wobei die Perforationen (7) an der Basis der Trennwand (6) angeordnet sind.

**7.** Platte nach einem der vorangehenden Ansprüche, wobei die Platte mehrere schneidende Trennwände (6) aufweist.

**8.** Platte nach Anspruch 7, wobei die Trennwände (6) aus zwei Reihen von Trennwänden zusammengesetzt sind, wobei die Trennwände (6) von jeder Reihe parallel zueinander und die Trennwänden (6) der anderen Reihe schneidend sind.

**9.** Platte nach Anspruch 8, wobei die Perforationen von zwei parallelen Trennwänden (6), die ein gleiches Abteil (8, 9) begrenzen, nicht ausgerichtet sind.

**10.** Platte nach einem der vorhergehenden Ansprüche, wobei die Abmessungen $L_{01}$ und $L_{02}$ des Abteils zum Verteilen (8) zwischen 100 und 1.000 mm betragen.

**11.** Platte nach einem der vorhergehenden Ansprüche, wobei die Abmessungen $L_{03}$ des Rückhalteabteils (9) zwischen 40 und 200 mm betragen.

**12.** Platte nach einem der vorhergehenden Ansprüche, wobei die Mittel für den Durchgang der Flüssigkeit Öffnungen (5) und/oder Schornsteine (11) sind, die aus der Oberseite der Platte vorstehen.

**13.** Platte nach einem der vorhergehenden Ansprüche, wobei die Platte ein sekundäres Verteilungssystem (10), das aus der Unterseite der Platte vorsteht, aufweist, um die Flüssigkeit zu verteilen, die aus den Mitteln für den Durchgang der Flüssigkeit (5, 11) kommt.

**14.** Platte nach Anspruch 13, wobei das sekundäre Verteilungssystem (10) Schornsteine und/oder Abweiser (12) aufweist.

**15.** Kolonne für den Wärmeaustausch und/oder Stoffaustausch zwischen einem Gas und einer Flüssigkeit, wobei die zwei Flüssigkeiten mittels einer Packung (3) in Kontakt gebracht werden, **dadurch gekennzeichnet, dass** die Kolonne mindestens eine Verteilerplatte (2) nach einem der vorhergehenden Ansprüche aufweist, um die Flüssigkeiten auf der Packung zu verteilen.

**16.** Schwimmender Lastkahn, insbesondere für die Gewinnung von Kohlenwasserstoffen, **dadurch gekennzeichnet, dass** er mindestens eine Kolonne (1) nach Anspruch 15 aufweist.

**17.** Verwendung einer Kolonne nach Anspruch 15 für ein Verfahren zur Behandlung von Gas, zum Auffangen von $CO_2$, zur Destillation oder zur Transformation von Luft.

**Claims**

**1.** A distributor tray for a column (1) intended for heat and/or material exchange between a gas and a liquid, comprising at least one wall (6) delimiting compartments (8, 9) on the upper face of said tray (2), said wall (6) comprising perforations so as to allow part of the liquid to flow between said compartments (8, 9), wherein said tray comprises at least one distribution compartment (8) including at least one means (5, 11) allowing passage of the liquid through said tray (2) and at least one means (4) allowing passage of the gas through said tray (2), **characterized in that** said tray comprises at least one retention compartment (9) on the periphery of said tray (2) comprising no means allowing passage of the liquid through said tray.

**2.** A tray as claimed in claim 1, wherein said retention compartment (9) comprises no means allowing passage of the gas through said tray.

**3.** A tray as claimed in any one of the previous claims, wherein each compartment on the periphery of said tray is a retention compartment (9).

**4.** A tray as claimed in any one of the previous claims, wherein said means allowing passage of the gas are gas distribution elements in form of chimneys (4) projecting from the upper face of said tray.

**5.** A tray as claimed in claim 4, wherein the height of said wall (6) is greater than or substantially equal to the height of said chimneys (4).

**6.** A tray as claimed in any one of the previous claims, wherein perforations (7) are arranged at the base of said wall (6).

**7.** A tray as claimed in any one of the previous claims, wherein said tray comprises several secant walls (6).

**8.** A tray as claimed in claim 7, wherein said walls (6) consist of two series of walls, walls (6) of each series being parallel to one another and secant to walls (6) of the other series.

**9.** A tray as claimed in claim 8, wherein the perforations of two parallel walls (6) delimiting the same compartment (8,9) are not aligned.

**10.** A tray as claimed in any one of the previous claims, wherein dimensions $L_{c1}$ and $L_{c2}$ of said distribution compartment (8) range between 100 and 1000 mm.

**11.** A tray as claimed in any one of the previous claims, wherein dimensions $L_{c3}$ of said retention compartment (9) range between 40 and 200 mm.

**12.** A tray as claimed in any one of the previous claims, wherein the liquid passage means are orifices (5) and/or chimneys (11) projecting from the upper face of said tray.

**13.** A tray as claimed in any one of the previous claims, wherein said tray comprises a secondary distribution system (10) projecting from the lower face of said tray for distributing said liquid coming from said liquid passage means (5, 11).

**14.** A tray as claimed in claim 13, wherein said secondary distribution system (10) comprises chimneys and/or deflectors (12).

**15.** A column intended for heat and/or material exchange between a gas and a liquid, wherein the two fluids are contacted by means of a packing (3), **characterized in that** said column (1) comprises at least one distributor tray (2) as claimed in any one of the previous claims for distributing said fluids on said packing.

**16.** A floating barge, notably for hydrocarbon recovery, **characterized in that** it comprises at least one column (1) as claimed in claim 15.

**17.** Use of a column as claimed in claim 15 for a gas treatment, $CO_2$ capture, distillation or air conversion process.

**Figure 1**

**Art Antérieur
Figure 2**

$U_{L1} >> U_{L2}$

**Art antérieur
Figure 3**

**Figure 4**

**Figure 5**

**Figure 6**

Θ

Figure 7

Figure 8

Figure 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2989595
- US 6338774 B
- US 2004020238 A
- US 6149136 A
- US 5752538 A
- FR 2771018 A
- FR 2771019 A
- US 5132055 A
- FR 2989595 A
- US 2013277868 A

**Littérature non-brevet citée dans la description**

- **HIRT ; NICHOLS.** *JCP,* 1981, vol. 39, 201-225